(19) **Europäisches Patentamt**
**European Patent Office**
**Office européen des brevets**

(11) **EP 4 528 554 A1**

(12) **EUROPEAN PATENT APPLICATION**

(43) Date of publication:
**26.03.2025 Bulletin 2025/13**

(21) Application number: **24188859.3**

(22) Date of filing: **16.07.2024**

(51) International Patent Classification (IPC):
**G06F 17/16** (2006.01)

(52) Cooperative Patent Classification (CPC):
**G06F 17/16**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.09.2023 JP 2023152287**

(71) Applicant: **FUJITSU LIMITED**
**Kawasaki-shi, Kanagawa 211-8588 (JP)**

(72) Inventors:
• **KONOSHIMA, Makiko**
  **Kawasaki-shi, Kanagawa, 211-8588 (JP)**
• **TAMURA, Hirotaka**
  **Yokohama-shi, Kanagawa, 223-0066 (JP)**

(74) Representative: **Hoffmann Eitle**
**Patent- und Rechtsanwälte PartmbB**
**Arabellastraße 30**
**81925 München (DE)**

(54) **COMPUTER-READABLE RECORDING MEDIUM STORING PROGRAM, DATA PROCESSING DEVICE, AND DATA PROCESSING METHOD**

(57)  A data processing program for causing a computer to execute: acquiring values of first matrix elements being problem information of a matrix decomposition problem representing a binary first matrix represented by the first matrix elements by a matrix product of a second and third matrix, and initial values of second matrix elements of the second matrix and third matrix elements of the third matrix; determining whether to adopt a change in a value of a fourth matrix element of any one of the second and third matrix elements based on a change amount of a value of an evaluation function; and searching for values of the second and third matrix elements by repeating processing of updating the value of the fourth matrix element while the fourth matrix element is changed when it is determined to adopt the change in the value of the fourth matrix element.

FIG. 1

**Description**

FIELD

The embodiments discussed herein are related to a program, a data processing device, and a data processing method.

BACKGROUND

A matrix decomposition problem representing a known binary matrix by a matrix product of a plurality of matrices is known. Calculation of the matrix decomposition problem may be performed in a case where properties of collected matrix data are analyzed, and the like.

Furthermore, since before, a method of searching for a decomposition result (solution) that reduces a value of an evaluation function (sometimes referred to as an energy function) of a matrix decomposition problem of a binary matrix by a local search using a Markov Chain Monte Carlo (MCMC) method has been proposed.

Japanese Laid-open Patent Publication No. 2021-111097, F. Camilli, et al., "Matrix factorization with neural networks", arXiv:2212.02105v1, 2022, and Z. Zhang, et al., "Binary matrix factorization for analyzing gene expression data", [online], 2 Sep 2009, Springer, [retrieved on August 17, 2023], the Internet <https://doi.org/10.1007/s10618-009-0145-2> are disclosed as related art.

SUMMARY

TECHNICAL PROBLEM

In a case where the solution is searched for by the MCMC method using the evaluation function of the matrix decomposition problem of the binary matrix, the search takes time. For example, in a case where a first matrix that is a binary matrix is represented by a matrix product of a second matrix and a third matrix, in a product-sum operation between a matrix element of a row of the second matrix and a matrix element of a column of the third matrix, calculation of a sum is an operation of a logical sum in which an answer is 1 when any one element is 1 or more. Accordingly, a shape of the evaluation function becomes a flat shape, and it becomes difficult to perform the local search.

In one aspect, an object is to search for a solution of a matrix decomposition problem at high speed.

SOLUTION TO PROBLEM

According to an aspect of the embodiments, there is provided a data processing program including instructions which, when executed by a computer, cause the computer to execute processing including: acquiring values of a plurality of first matrix elements that are problem information of a matrix decomposition problem that represents a binary first matrix represented by the plurality of first matrix elements by a matrix product of a second matrix and a third matrix, and initial values of a plurality of second matrix elements of the second matrix and a plurality of third matrix elements of the third matrix; determining whether to adopt a change in a value of a fourth matrix element of any one of the plurality of second matrix elements and the plurality of third matrix elements, based on a change amount of a value of an evaluation function represented by a sum of inequality constraint terms set for the plurality of first matrix elements, the change amount being occurred in association with a change in the value of the fourth matrix element; and searching for values of the plurality of second matrix elements and the plurality of third matrix elements by repeating processing of updating the value of the fourth matrix element while the fourth matrix element is changed when it is determined that the change in the value of the fourth matrix element is adopted.

ADVANTAGEOUS EFFECTS OF INVENTION

In one aspect, it is possible to search for a solution of a matrix decomposition problem at high speed.

BRIEF DESCRIPTION OF DRAWINGS

FIG. 1 is a diagram illustrating an example of a data processing device of a first embodiment;
FIG. 2 is a diagram illustrating a storage example of matrix elements of a matrix W and a matrix H;
FIG. 3 is a diagram illustrating an example of a logical function;

FIG. 4 is a diagram illustrating an example of a mod function;

FIG. 5 is a diagram illustrating an example of a relationship between a value of a product-sum operation of a matrix element of an i-th row of the matrix W and a matrix element of a j-th column of the matrix H and a value of $G_{ij}$;

FIG. 6 is a diagram illustrating a truth table of exclusive NOR;

FIG. 7 is a diagram illustrating an example of a relationship between a value of a sum of products of the i-th row of the matrix W and the j-th column of the matrix H and a value of $Q_{ij}$;

FIG. 8 is a block diagram illustrating a hardware example of a data processing device of a second embodiment;

FIG. 9 is a block diagram illustrating a functional example of the data processing device;

FIG. 10 is a flowchart illustrating an example of a processing procedure of the data processing device of the second embodiment;

FIG. 11 is a diagram illustrating a search unit of a comparative example;

FIG. 12 is a flowchart illustrating a processing procedure of a data processing device including the search unit of the comparative example;

FIG. 13 is a diagram illustrating an example of an experimental result; and

FIG. 14 is a diagram illustrating another hardware example of the data processing device.

DESCRIPTION OF EMBODIMENTS

Hereinafter, modes for carrying out embodiments will be described with reference to the drawings.

A data processing device of each of the following embodiments searches for, by a local search such as a Markov Chain Monte Carlo (MCMC) method, a solution of a matrix decomposition problem that represents a binary first matrix (binary matrix) represented by a plurality of matrix elements by a matrix product of a second matrix and a third matrix. In the following description, the first matrix is referred to as a matrix V, the second matrix is referred to as a matrix W, and the third matrix is referred to as a matrix H. Note that the matrix W may be referred to as a coefficient matrix, and the matrix H may be referred to as a base matrix.

A solution search of the matrix decomposition problem corresponds to obtaining the matrix W and the matrix H that satisfy the following Expression (1).

[Expression 1]

$$V \approx W \circ H \qquad (1)$$

$V \in \{0, 1\}^{MN}$, $W \in \{0, 1\}^{MK}$, and $H \in \{0, 1\}^{KN}$ are satisfied. M represents the number of rows, N represents the number of columns, and K represents the number of ranks (a rank of a matrix). A white circle means a matrix product according to a Boolean operation (logical operation) rule. Note that values of matrix elements of the binary matrix may be represented by numerical values 0 and 1 as described above, or may be represented by true, false, or the like.

Although not particularly limited, the matrix V is obtained by, for example, arranging collected data in a matrix. For example, whether or not a customer i has purchased a product j may be used as a matrix element $V_{ij}$ in an i-th row and a j-th column of the matrix V. In this case, the matrix V represents a purchase history of the product of the customer. The matrix W, which is the coefficient matrix, and the matrix H, which is the base matrix, may be used for data analysis or the like, where the matrix W is a matrix representing a purchase pattern for each customer and the matrix H is a matrix representing a purchase pattern for each product.

Besides, information represented by various binary values such as whether or not a word j is used in a document i and whether or not a gene j exists in a gene sequence i may be used as the matrix element $V_{ij}$ in the matrix V.

(First Embodiment)

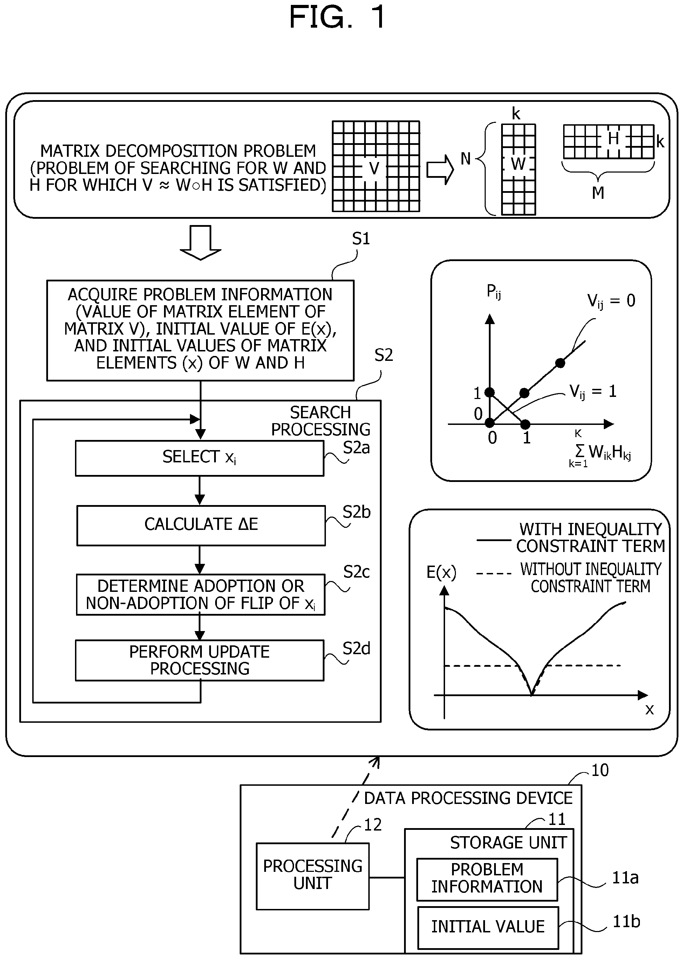

FIG. 1 is a diagram illustrating an example of a data processing device of a first embodiment. A data processing device 10 of the first embodiment may be a client device, or may be a server device. The data processing device 10 may be referred to as a computer.

The data processing device 10 of the first embodiment includes a storage unit 11 and a processing unit 12.

The storage unit 11 may include a volatile semiconductor memory such as a random access memory (RAM), or may include a nonvolatile storage such as a hard disk drive (HDD) or a flash memory. Furthermore, the storage unit 11 may include both the volatile semiconductor memory and the nonvolatile storage.

The storage unit 11 stores a value of each matrix element of the matrix V, which is problem information 11a of the matrix decomposition problem, and an initial value 11b of each matrix element of the matrices W and H. The storage unit 11 may store an initial value of an evaluation function (E(x)) of the matrix decomposition problem.

In the E(x) used by the data processing device 10 of the first embodiment, an inequality constraint term is set for

each matrix element ($V_{ij}$) in the matrix V. The E(x) is represented by a sum of the inequality constraint term for each $V_{ij}$.

When a result of a logical operation of a matrix element of an i-th row of the matrix W and a matrix element of a j-th column of the matrix H, which represents a product-sum operation included in calculation of a matrix product, matches a value of the $V_{ij}$, a value of the inequality constraint term set to the $V_{ij}$ is 0. When the result of the logical operation does not match the value of the $V_{ij}$, the value of the inequality constraint term set to the $V_{ij}$ is a value greater than 0.

In a case where the logical operation described above is an operation of performing a product-sum operation of the matrix element of the i-th row of the matrix W and the matrix element of the j-th column of the matrix H by a logical product (AND) and a logical sum (OR), an inequality constraint term ($P_{ij}$) may be represented by the following Expression (2).

[Expression 2]

$$P_{ij} = \max\left(0, (1 - V_{ij})\lambda \sum_{k=1}^{K} W_{ik}H_{kj} + V_{ij}\lambda\left(1 - \sum_{k=1}^{K} W_{ik}H_{kj}\right)\right) \qquad (2)$$

$$= \begin{cases} \max\left(0, \lambda \sum_{k=1}^{K} W_{ik}H_{kj}\right) & (V_{ij} = 0) \\ \max\left(0, \lambda - \lambda \sum_{k=1}^{K} W_{ik}H_{kj}\right) & (V_{ij} = 1) \end{cases}$$

In Expression (2), $\lambda$ is a weight value of the inequality constraint term. The $\lambda$ may be a different value for each $V_{ij}$ or the same value. Note that the description will be made assuming that the value of the $\lambda$ is fixed in the first embodiment. An example in which the value of the $\lambda$ is changed during the solution search will be described in a second embodiment.

In FIG. 1, a relationship between a value of the product-sum operation of the matrix element of the i-th row of the matrix W and the matrix element of the j-th column of the matrix H and a value of the $P_{ij}$. A horizontal axis represents the value (actual value) of the product-sum operation, and a vertical axis represents the value of the $P_{ij}$. Note that, in the example of FIG. 1, $\lambda = 1$ is satisfied.

When the $V_{ij}$ is 0 and the value of the product-sum operation is 0, a correct solution is obtained, and thus $P_{ij} = 0$ is satisfied. On the other hand, when the value of the product-sum operation is greater than 0, an incorrect solution is obtained, and thus the $P_{ij}$ takes a value greater than 0. At this time, the $P_{ij}$ is a value obtained by multiplying the value of the product-sum operation by the $\lambda$ as indicated in Expression (2). As the value of the product-sum operation increases, the value of the $P_{ij}$ increases since the value of the product-sum operation deviates from a correct value. In this manner, when $V_{ij} = 0$ and $\lambda = 1$ are satisfied, the $P_{ij}$ is equal to the value of the product-sum operation.

When the $V_{ij}$ is 1 and the value of the product-sum operation is 0, an incorrect solution is obtained, and thus the $P_{ij}$ takes a value greater than 0. In a case where $\lambda = 1$ is satisfied, the $P_{ij}$ is 1 from Expression (2). On the other hand, when the value of the product-sum operation is greater than 1, a correct solution is obtained, and thus $P_{ij} = 0$ is satisfied.

Note that, in an actual problem, the value of the $V_{ij}$ is often 0. For example, when the $V_{ij}$ represents whether or not the word j is used in the document i, the total number of words is assumed to be much greater than the number of words used, so $V_{ij} = 0$ (no use) is often satisfied. In a case where the $V_{ij}$ represents whether or not the customer i has purchased the product j, since the total number of products is assumed to be much greater than the number of purchased products, $V_{ij} = 0$ (no purchase) is often satisfied. Since the value of the $V_{ij}$ is often 0, the values of the matrix elements of the matrices W and H also tend to be 0.

The value of each matrix element of the matrix V, the initial value of the E(x), and the initial value of each matrix element of the matrices W and H are input by a user, for example, and stored in the storage unit 11. These values may be received by the data processing device 10 from an information processing device (not illustrated) via a network. As described above, since the values of the matrix elements of the matrices W and H tend to be 0, the initial values are all set to 0, for example.

The storage unit 11 may further store calculation conditions of the solution search by the local search. For example, in a case where simulated annealing or a replica-exchange method, which is one type of the MCMC method, is applied to the solution search, the storage unit 11 may store calculation conditions for these. In a case where the solution search is performed by the simulated annealing, the calculation conditions include, for example, a maximum temperature, a temperature parameter change schedule, a minimum temperature, a search end condition, and the like. In a case where the solution search is performed by the replica-exchange method, the calculation conditions include, for example, the number of replicas, a value of a temperature parameter to be set in each replica, a replica exchange frequency, a search end condition, and the like.

The processing unit 12 may be implemented by, for example, an electronic circuit such as an application specific integrated circuit (ASIC) or a field programmable gate array (FPGA). Note that the processing unit 12 may also be implemented by a processor such as a central processing unit (CPU), a graphics processing unit (GPU), or a digital signal processor (DSP). The processor executes, for example, a program stored in a memory such as a RAM (which may be the storage unit 11). A set of processors may be referred to as a multiprocessor or simply a "processor". Furthermore, the processing unit 12 may include a processor and an electronic circuit such as an ASIC or an FPGA. The processing unit 12 searches for a combination of values of $W_{ik}$ and $H_{jk}$ (each binary value) that minimizes a value of the evaluation function ($E(x)$), and thus may also be referred to as an Ising machine.

In FIG. 1, an example of a procedure of processing performed by the processing unit 12 is illustrated.

Step S1: The processing unit 12 acquires, from the storage unit 11, the value of each matrix element of the matrix V, which is the problem information 11a of the matrix decomposition problem, the initial value of the $E(x)$, and the initial value 11b of each matrix element of the matrices W and H.

Step S2: The processing unit 12 performs search processing of a solution by the local search. The search processing includes the following steps.

Step S2a: The processing unit 12 selects $x_i$ that is a matrix element of the matrix W or the matrix H. The $x_i$ is selected randomly or in predetermined order. For example, the $x_i$ may be arranged one-dimensionally as follows and stored in the storage unit 11.

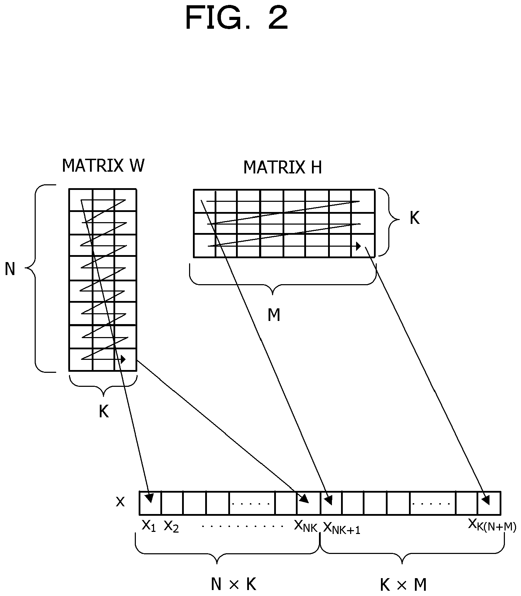

FIG. 2 is a diagram illustrating a storage example of the matrix elements of the matrix W and the matrix H.

The matrix elements of the matrix W are stored in the storage unit 11 as $x_i$, $x_2$,..., $x_{NK}$ in order of raster scanning from an upper left to a lower right. Similarly, the matrix elements of the matrix H are stored in the storage unit 11 as $x_{NK+1}$,..., $x_{K(N+M)}$ in order of raster scanning from the upper left to the lower right.

Note that, in the processing in step S2a, the processing unit 12 may perform, for example, the following processing in steps S2b and S2c in parallel for K(N + M) $x_1$ to $x_{K(N+M)}$ without selecting the $x_i$.

Step S2b: The processing unit 12 calculates a change amount ($\Delta E$) of the value of the $E(x)$ associated with a change in a value of the selected $x_i$. For example, the processing unit 12 calculates a value ($E'(x)$) of the evaluation function when the value of the $x_i$ changes from 0 to 1 or from 1 to 0 (hereinafter referred to as flip). Then, the processing unit 12 calculates the $\Delta E$ which is a difference between the $E'(x)$ and the $E(x)$.

Step S2c: The processing unit 12 determines whether to adopt the flip of the $x_i$. The adoption or non-adoption of the flip is determined based on the $\Delta E$. For example, in a case where max(0, $\Delta E$) is smaller than a threshold obtained based on a random number value and a value of a temperature parameter, the processing unit 12 adopts the flip of the $x_i$. For example, -log(rand) $\times$ T is used as the threshold. The rand represents a uniform random number value in a range of 0 to 1, and the T represents the value of the temperature parameter.

In a case where the processing in steps S2b and S2c is performed for the $x_1$ to $x_{K(N+M)}$ in parallel, $\Delta E_i$ (i = 1 to N + M) corresponding to changes in the $x_1$ to $x_{K(N+M)}$ is calculated. Then, any one flip of the $x_1$ to $x_{K(N+M)}$ is adopted based on the $\Delta E_i$.

Step S2d: In a case where it is determined that the flip of the $x_i$ is adopted, the processing unit 12 performs update processing. The processing unit 12 flips the $x_i$. Furthermore, the processing unit 12 may update the value of the $E(x)$.

After the processing in step S2d, the processing unit 12 repeats the processing from step S2a.

In a case where the simulated annealing is performed, the processing unit 12 decreases the value of the temperature parameter described above in accordance with a predetermined temperature parameter change schedule while the processing in steps S2a to S2d is repeated. Then, the processing unit 12 outputs, for example, values of the $x_1$ to $x_{K(N+M)}$ when a predetermined search end condition is satisfied, as a search result for the solution of the matrix decomposition problem. For example, the processing unit 12 displays the solution on a display device (not illustrated). Note that the processing unit 12 may update, for example, the value of the $E(x)$ every time the flip is adopted and hold a minimum value until then and the values of the $x_1$ to $x_{K(N+M)}$ when the minimum value is obtained. In that case, the processing unit 12 may output, as the search result, the values of the $x_1$ to $x_{K(N+M)}$ corresponding to the minimum value stored when the search end condition is satisfied.

In a case where the processing unit 12 performs the replica-exchange method, the processing unit 12 performs the processing in steps S2a to S2d indicated in FIG. 1 for the respective plurality of replicas set with values of the temperature parameter different from each other. Then, the processing unit 12 performs replica exchange each time the processing in steps S2a to S2d is repeated a predetermined number of times. For example, the processing unit 12 randomly selects two of the plurality of replicas. Then, the processing unit 12 exchanges the values of the temperature parameter or the values of S2a to S2d between the two selected replicas with a predetermined exchange probability based on a difference in the values of the evaluation function or a difference in the values of the temperature parameter between the replicas. For example, the processing unit 12 updates the value of the $E(x)$ every time a transition is accepted in each replica and holds the minimum value until then and the values of the $x_1$ to $x_{K(N+M)}$ when the minimum value is obtained. Then, for example, when a predetermined search end condition is satisfied, the processing unit 12 outputs, as a search result, the values of the $x_1$ to $x_{K(N+M)}$ corresponding to a smallest minimum value in all the replicas among the minimum values stored in the respective replicas.

As described above, the processing unit 12 of the data processing device 10 of the first embodiment uses the evaluation function (E(x)) represented by the sum of the inequality constraint term set for each matrix element ($V_{ij}$) in the matrix V. Then, the processing unit 12 determines the adoption or non-adoption the flip of the $x_i$ based on the change amount ($\Delta E$) of the value of the E(x) associated with the flip of the matrix element ($x_i$) of the matrix W or the matrix H. In a case where the flip of the $x_i$ is adopted, the processing unit 12 updates the value of the $x_i$. The processing unit 12 repeats the above processing while changing the $x_i$.

In FIG. 1, a schematic diagram of E(x) with an inequality constraint term and E(x) without an inequality constraint term is illustrated. The E(x) without the inequality constraint term may be represented by, for example, the following Expression (3).

[Expression 3]

$$E(x) = \sum_{i,j} \left\| \left( logical \left( \sum_{k=1}^{K} W_{ik}H_{kj} \right) \right) - V_{ij} \right\| \qquad (3)$$

In Expression (3), logical (A) is a logical function in which 0 is set when A = 0 is satisfied and 1 is set otherwise.

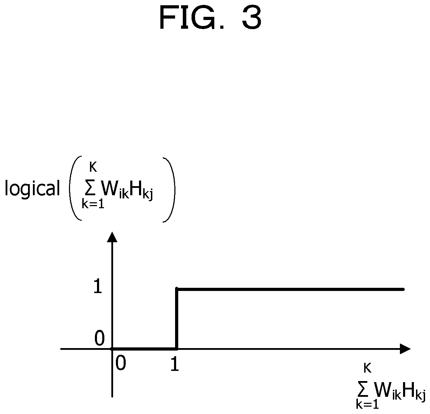

FIG. 3 is a diagram illustrating an example of the logical function. A horizontal axis represents the value (actual value) of the product-sum operation of the i-th row of the matrix W and the j-th column of the matrix H, and a vertical axis represents a logical value of the product-sum operation. When any one of K $W_{ik}H_{kj}$ is 1, the logical value is 1. That is, the logical function is a step function, and the logical value takes only a value of 0 or 1.

Thus, a distribution of the E(x) without the inequality constraint term is a similar distribution regardless of the number of $W_{ik}H_{kj}$ being 1. In the example of FIG. 1, the distribution of the E(x) without the inequality constraint term has a golf hole shape, and is a distribution in which it is difficult to find a state transition in which the value of the E(x) becomes small and it is difficult to perform the solution search.

In a logical sum operation, a higher order term is generated as the number of K, which is the number of ranks, increases. For example, in a case where K = 2 is satisfied, a OR b = a + b - ab is satisfied and a second-order term is generated, but when the number of K increases, a third-order or higher term is generated. When the higher order term exists, the shape of the E(x) without the inequality constraint term tends to be a flatter shape, and it is difficult to perform the solution search.

On the other hand, a distribution of the E(x) with the inequality constraint term used in the present embodiment is a distribution including a gentle inclination as illustrated in FIG. 1. Thus, it is easy to search for the solution of the matrix decomposition problem, and it is possible to search for the solution at high speed. As a result, for example, it may be expected to shorten an analysis time when properties of collected matrix data are analyzed by performing matrix decomposition, and the like.

(Example in which Logical Operation is Performed by Logical Product and Exclusive OR)

In the example described above, the logical operation has been described as the operation in which the product-sum operation of the matrix element of the i-th row of the matrix W and the matrix element of the j-th column of the matrix H is performed by the logical product and the logical sum, but the present disclosure is not limited to this. The logical operation may be an operation in which the product-sum operation of the matrix element of the i-th row of the matrix W and the matrix element of the j-th column of the matrix H is performed by the logical product and exclusive OR. The exclusive OR may also be referred to as XOR. In a case where it is assumed that a sum is the exclusive OR, the E(x) without the inequality constraint term includes a mod function as indicated below instead of the logical function of Expression (3).

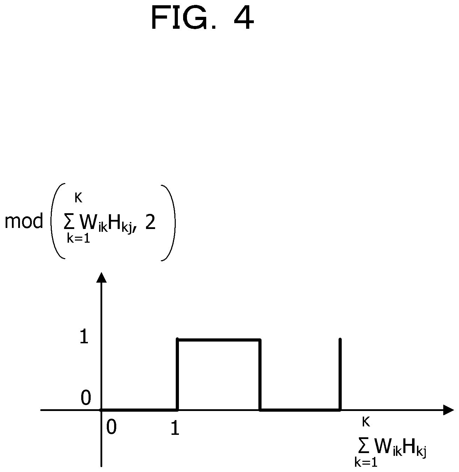

FIG. 4 is a diagram illustrating an example of the mod function. A horizontal axis represents the value (actual value) of the product-sum operation of the i-th row of the matrix W and the j-th column of the matrix H, and a vertical axis represents a value of the mod function indicating a remainder when the value of the product-sum operation is divided by 2.

Such a mod function is a periodic function unlike the logical function illustrated in FIG. 3. The value of the mod function takes only a value of 0 or 1. In this case, the distribution of the E(x) indicates a tendency that there are some deep valleys (local solutions) that are not flat at E(x) ≠ 0. Furthermore, some of the local solutions are separated from a correct answer by a Hamming distance, and may not escape from the local solutions, or even when they escape from the local solutions, they may fall into other local solutions, and it may be difficult to obtain the correct answer.

Thus, the E(x) in which the inequality constraint term is set for each matrix element ($V_{ij}$) of the matrix V may be used, similarly to the case where the product-sum operation is represented by the logical product and the logical sum. In the product-sum operation of the matrix element of the i-th row of the matrix W and the matrix element of the j-th column of the matrix H, in a case where it is assumed that the $V_{ij}$ is obtained by performing the product by the logical product and the sum by the exclusive OR, an inequality constraint term ($G_{ij}$) may be represented by the following Expression (4).

[Expression 4]

$$G_{ij} = \lambda \mathrm{per}\left( (1 - V_{ij}) \sum_{k=1}^{K} W_{ik}H_{kj} + V_{ij}\left(1 - \sum_{k=1}^{K} W_{ik}H_{kj}\right) \right) \qquad (4)$$

$$= \begin{cases} \lambda \mathrm{per}\left( \sum_{k=1}^{K} W_{ik}H_{kj} \right) & (V_{ij} = 0) \\ \lambda \mathrm{per}\left( 1 - \sum_{k=1}^{K} W_{ik}H_{kj} \right) & (V_{ij} = 1) \end{cases}$$

In Expression (4), per(x) is a function satisfying per(x) = per(x + 2), per(0) = 0, and per(1) = 1. $\lambda$ is a weight value of the inequality constraint term.

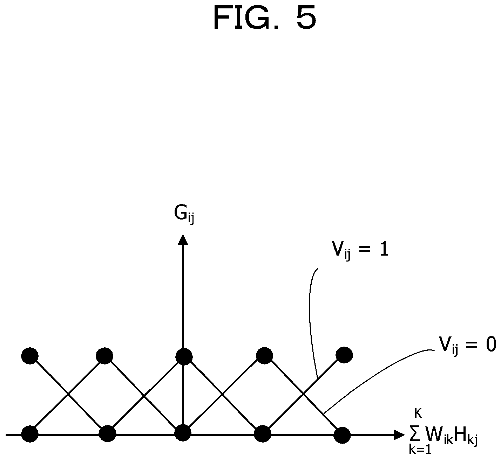

FIG. 5 is a diagram illustrating an example of a relationship between the value of the product-sum operation of the matrix element of the i-th row of the matrix W and the matrix element of the j-th column of the matrix H and a value of the $G_{ij}$. A horizontal axis represents the value (actual value) of the product-sum operation, and a vertical axis represents the value of the $G_{ij}$.

Unlike the $P_{ij}$ illustrated in FIG. 1, the $G_{ij}$ changes periodically. Such $G_{ij}$ also becomes 0 when a result of the logical operation in which the product-sum operation is represented by the logical product and the exclusive OR matches the value of the $V_{ij}$, and becomes a value greater than 0 when the result does not match the $V_{ij}$. The processing unit 12 performs the search processing in step S2 of FIG. 1 by using the E(x) obtained by integrating such $G_{ij}$ for each $V_{ij}$, thereby obtaining an effect similar to that of the case where the E(x) obtained by integrating the $P_{ij}$ for each $V_{ij}$ is used.

(Example in which Logical Operation is Performed by Exclusive NOR and Majority Decision of Exclusive NOR)

The logical operation may be an operation in which the product-sum operation of the matrix element of the i-th row of the matrix W and the matrix element of the j-th column of the matrix H is performed by exclusive NOR and a majority decision of the exclusive NOR. The exclusive NOR is also referred to as an equivalence logic or a match logic, and may also be referred to as XNOR or ENOR.

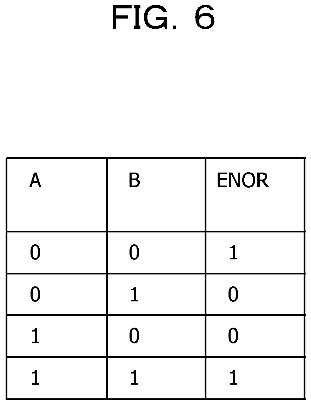

FIG. 6 is a diagram illustrating a truth table of the exclusive NOR. A value of the ENOR is 1 when A and B are equal (the same), otherwise it is 0.

A value of the majority decision is 1 when the number of 1 is greater than the number of 0 for the value of the ENOR, and 0 when the number of 0 is greater than the number of 1. The majority decision may also be referred to as Bitcount.

Such an operation may be used for calculation of input/output of a neuron of a neural network. A logical function in a case where the product of the product-sum operation is performed by the exclusive NOR and the sum is performed by the majority decision of the exclusive NOR is a step function as in FIG. 3. Note that, unlike FIG. 3, the value of the product-sum operation rising to 1 is a value greater than K/2. In this case, a distribution of the E(x) without the inequality constraint term is similar to the distribution of the E(x) without the inequality constraint term illustrated in FIG. 1. Thus, in the distribution, it is difficult to find a state transition in which the value of the E(x) becomes small, and it is difficult to perform the solution search.

Thus, the E(x) in which the inequality constraint term is set for each matrix element ($V_{ij}$) of the matrix V may be used, similarly to the case where the product-sum operation is performed by the logical product and the logical sum. In the product-sum operation of the i-th row of the matrix W and the j-th column of the matrix H, in a case where it is assumed that the $V_{ij}$ is obtained by performing the product by the ENOR and the sum by the majority decision of the ENOR, an inequality constraint term ($Q_{ij}$) may be represented by the following Expression (5).

[Expression 5]

$$Q_{ij} = \max\left( \lfloor K/2 \rfloor, (1 - V_{ij})\lambda \sum_{k=1}^{K} W_{ik}H_{kj} + V_{ij}\lambda\left(1 - \sum_{k=1}^{K} W_{ik}H_{kj}\right) \right) \quad (5)$$

$$= \begin{cases} \max\left( \lfloor K/2 \rfloor, \lambda \sum_{k=1}^{K} W_{ik}H_{kj} \right) & (V_{ij} = 0) \\ \max\left( \lfloor K/2 \rfloor, \lambda - \lambda \sum_{k=1}^{K} W_{ik}H_{kj} \right) & (V_{ij} = 1) \end{cases}$$

Expression (5) is substantially similar to Expression (2), but one of two arguments of a max function is not 0 but a predetermined threshold (expressed by a floor function) that is a maximum integer of K/2 or less.

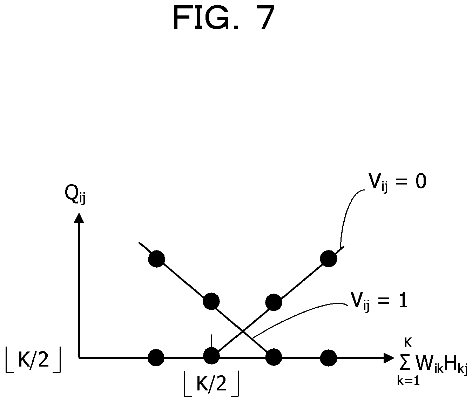

FIG. 7 is a diagram illustrating an example of a relationship between the value of the sum of products of the i-th row of the matrix W and the j-th column of the matrix H and a value of the $Q_{ij}$. A horizontal axis represents the value (actual value) of the product-sum operation of the i-th row of the matrix W and the j-th column of the matrix H, and a vertical axis represents the value of the $Q_{ij}$.

In a case where $V_{ij} = 0$ is satisfied, when the value of the product-sum operation is greater than the threshold, a result of the logical operation by the ENOR and the majority decision thereof does not match the value of the $V_{ij}$, and thus the $Q_{ij}$ is a value greater than the threshold. When the value of the product-sum operation is the threshold or less, the result of the logical operation by the ENOR and the majority decision thereof matches the value of the $V_{ij}$, and thus the value of the $Q_{ij}$ is the threshold.

In a case where $V_{ij} = 1$ is satisfied, when the value of the product-sum operation is the threshold + 1 or more, the result of the logical operation by the ENOR and the majority decision thereof matches the value of the $V_{ij}$, and thus the value of the $Q_{ij}$ is the threshold. When the value of the product-sum operation is smaller than the threshold + 1, the result of the logical operation by the ENOR and the majority decision thereof does not match the value of the $V_{ij}$, and thus the $Q_{ij}$ is a value greater than the threshold.

The processing unit 12 performs the search processing in step S2 of FIG. 1 by using the E(x) obtained by integrating such $Q_{ij}$ for each $V_{ij}$, thereby obtaining an effect similar to that of the case where the E(x) obtained by integrating the $P_{ij}$ for each $V_{ij}$ is used.

(Second Embodiment)

Next, a second embodiment will be described.

A data processing device 20 of the second embodiment may be a client device, or may be a server device. The data processing device 20 may be referred to as a computer.

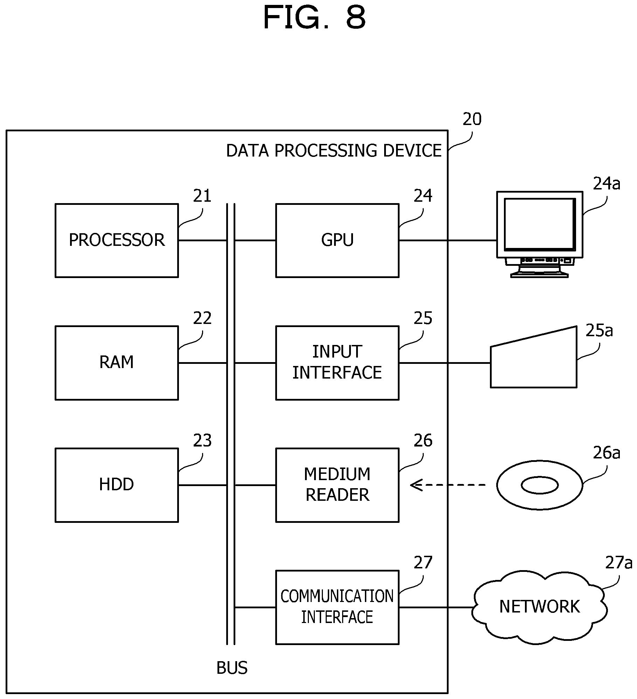

FIG. 8 is a block diagram illustrating a hardware example of the data processing device of the second embodiment.

The data processing device 20 is, for example, a computer, and includes a processor 21, a RAM 22, an HDD 23, a GPU 24, an input interface 25, a medium reader 26, and a communication interface 27. The units described above are coupled to a bus.

The processor 21 is a processor such as a GPU or a CPU including an arithmetic circuit that executes a program command. The processor 21 loads at least a part of a program and data stored in the HDD 23 into the RAM 22, and executes the program. Note that the processor 21 may include a plurality of processor cores. Furthermore, the data processing device 20 may include a plurality of processors. Note that a set of the plurality of processors (multiprocessor) may be referred to as a "processor".

The RAM 22 is a volatile semiconductor memory that temporarily stores a program to be executed by the processor 21 and data to be used by the processor 21 for arithmetic operations. Note that the data processing device 20 may include a memory of a type different from the RAM 22, or may include a plurality of memories.

The HDD 23 is a nonvolatile storage device that stores programs of software such as an operating system (OS), middleware, and application software, and data. The programs include, for example, a program for causing the data processing device 20 to execute processing of searching for a solution of the matrix decomposition problem. Note that the data processing device 20 may include another type of storage device such as a flash memory or a solid state drive (SSD), or may include a plurality of nonvolatile storage devices.

The GPU 24 outputs an image to a display 24a coupled to the data processing device 20 in accordance with a command from the processor 21. As the display 24a, a cathode ray tube (CRT) display, a liquid crystal display (LCD), a plasma display panel (PDP), an organic electro-luminescence (OEL) display, or the like may be used.

The input interface 25 acquires input signals from an input device 25a coupled to the data processing device 20, and outputs the input signals to the processor 21. As the input device 25a, a pointing device such as a mouse, a touch panel, a touch pad, or a trackball, a keyboard, a remote controller, a button switch, or the like may be used. Furthermore, a plurality of types of input devices may be coupled to the data processing device 20.

The medium reader 26 is a reading device that reads a program and data recorded on a recording medium 26a. As the recording medium 26a, for example, a magnetic disk, an optical disk, a magneto-optical disk (MO), a semiconductor memory, or the like may be used. The magnetic disk includes a flexible disk (FD) and an HDD. The optical disk includes a compact disc (CD) and a digital versatile disc (DVD).

The medium reader 26 copies, for example, a program and data read from the recording medium 26a to another recording medium such as the RAM 22 or the HDD 23. The read program is executed by, for example, the processor 21. Note that the recording medium 26a may be a portable recording medium, and may be used for distribution of the program and data. Furthermore, the recording medium 26a and the HDD 23 may be referred to as computer-readable recording media.

The communication interface 27 is an interface that is coupled to a network 27a and communicates with another information processing device via the network 27a. The communication interface 27 may be a wired communication interface coupled to a communication device such as a switch by a cable, or may be a wireless communication interface coupled to a base station via a wireless link.

Next, functions and processing procedures of the data processing device 20 will be described.

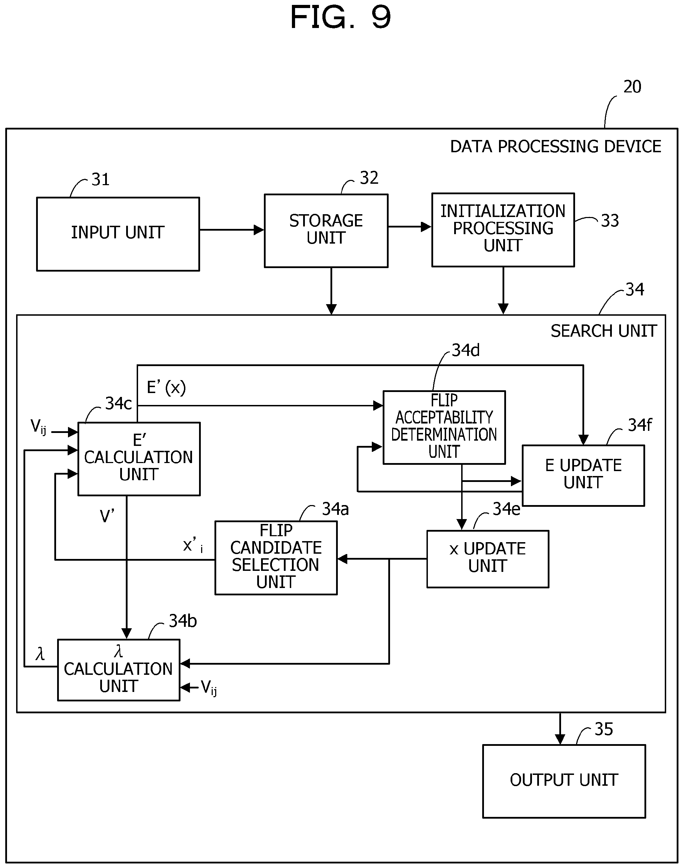

FIG. 9 is a block diagram illustrating a functional example of the data processing device.

The data processing device 20 includes an input unit 31, a storage unit 32, an initialization processing unit 33, a search unit 34, and an output unit 35. The storage unit 32 is equipped using, for example, the RAM 22 or the HDD 23. The input unit 31, the initialization processing unit 33, the search unit 34, and the output unit 35 are equipped using, for example, the processor 21 and a program.

The storage unit 32 is a functional block as an example of the storage unit 11 illustrated in FIG. 1, and other functional blocks are functional blocks as an example of the processing unit 12 illustrated in FIG. 1.

The input unit 31 acquires a value of a matrix element of the matrix V, which is problem information of the matrix decomposition problem, an initial value of an evaluation function ($E(x)$) of the matrix decomposition problem, and initial values of matrix elements in the matrices W and H. These values are input by, for example, a user operating the input device 25a. Alternatively, the input unit 31 may receive these values from another information processing device via the network 27a.

The input unit 31 may further acquire calculation conditions of the solution search. For example, in a case where the simulated annealing or the replica-exchange method, which is one type of the MCMC method, is applied to the solution search, the input unit 31 acquires calculation conditions for these. In a case where the solution search is performed by the simulated annealing, the calculation conditions include, for example, a maximum temperature, a temperature parameter change schedule, a minimum temperature, a search end condition, and the like. In a case where the solution search is performed by the replica-exchange method, the calculation conditions include, for example, the number of replicas, a value of a temperature parameter to be set in each replica, a replica exchange frequency, a search end condition, and the like.

The storage unit 32 stores the problem information, the initial values, and the like acquired by the input unit 31. The storage unit 32 may store an initial value of the $\lambda$ indicated in Expressions (2), (4), and (5).

The initialization processing unit 33 performs initialization processing of the search unit 34 by acquiring the problem information and various initial values stored in the storage unit 32 and setting these in the search unit 34.

The search unit 34 includes a flip candidate selection unit 34a, a $\lambda$ calculation unit 34b, an E' calculation unit 34c, a flip acceptability determination unit 34d, an x update unit 34e, and an E update unit 34f.

The flip candidate selection unit 34a selects $x_i$, which is a matrix element of the matrix W or the matrix H, as a flip candidate. The $x_i$ is selected randomly or in predetermined order. Furthermore, the flip candidate selection unit 34a outputs a flipped value ($x'_i$) of the selected $x_i$.

The $\lambda$ calculation unit 34b calculates the $\lambda$ that is a weight value of an inequality constraint term. For example, the $\lambda$ calculation unit 34b acquires a value of each $V_{ij}$. Then, the $\lambda$ calculation unit 34b sets $\lambda0$ as $\lambda_{ij}$ in a case where $V_{ij} = 0$ is satisfied, and sets $\lambda1$ different from the $\lambda0$ as the $\lambda_{ij}$ in a case where $V_{ij} = 1$ is satisfied. Note that the $\lambda$ calculation unit 34b may use, for example, a value input by a user operating the input device 25a as an initial value of the $\lambda_{ij}$. Furthermore, the value of the $\lambda$ may be set according to the number of matrix elements of the matrix V having a value of 1.

Then, in a case where a value of a certain matrix element of the matrix V does not match a result ($V'$) of a logical operation representing a product-sum operation included in calculation of a matrix product by the flip of the $x_i$, the $\lambda$ calculation unit 34b increases the value of the $\lambda$ of the inequality constraint term set to the matrix element of the matrix V by a predetermined ratio.

For example, the $\lambda$ calculation unit 34b calculates $\lambda = \lambda(1 + \lambda r)$ using $\lambda r$, which is a value greater than 0, and increases the $\lambda$. In a case where the $V'$ and the value of the matrix element of the corresponding matrix V match while the solution search is repeated, the $\lambda$ calculation unit 34b may decrease the value of the $\lambda$ or return the value of the $\lambda$ to the initial value.

Note that, in a case where a fixed value is used as the $\lambda_{ij}$, the $\lambda$ calculation unit 34b may not be provided.

The E' calculation unit 34c calculates the inequality constraint term represented by Expression (2), Expression (4), or Expression (5) based on the values of the $x'_i$ and the $\lambda$. Then, the E' calculation unit 34c calculates $E'(x)$, which is a total sum of the inequality constraint terms for each $V_{ij}$.

Note that the E' calculation unit 34c calculates the value ($V'$) of the product-sum operation of the matrix element of the i-th row of the matrix W and the matrix element of the j-th column of the matrix H using the $x'_i$, and supplies the value ($V'$) to the $\lambda$ calculation unit 34b. In a case where a value of the $\lambda_{ij}$ is changed by the $\lambda$ calculation unit 34b, the E' calculation unit 34c recalculates the $E'(x)$ using the value.

The flip acceptability determination unit 34d calculates $\Delta E$, which is a difference between the $E(x)$ before the flip of the $x_i$ and the $E'(x)$, and determines acceptability of the flip of the $x_i$ based on the $\Delta E$. For example, in a case where $\max(0, \Delta E)$ is smaller than a threshold obtained based on a random number value and a value of a temperature parameter, the flip acceptability determination unit 34d adopts, for example, the flip of the $x_i$. For example, $-\log(\text{rand}) \times T$ is used as the threshold. The rand represents a uniform random number value in a range of 0 to 1, and the T represents the value of the temperature parameter.

The x update unit 34e holds, for example, as illustrated in FIG. 2, $N \times K + K \times M$ matrix elements of the matrix W and the matrix H as $x_1$ to $x_{K(N+M)}$ in a one-dimensional array. In a case where it is determined that the flip of the $x_i$ is acceptable, the x update unit 34e flips (updates) the $x_i$ to the $x'_i$.

The E update unit 34f holds a value of the E(x). In a case where it is determined that the flip of the $x_i$ is acceptable, the E update unit 34f updates the E(x) before the flip to the E'(x).

The output unit 35 outputs a search result (for example, values of the $x_1$ to $x_{K(N+M)}$ corresponding to a minimum value of the E(x) obtained until then) when a search end condition is satisfied. For example, the output unit 35 may output the search result to the display 24a to be displayed, transmit the search result to another information processing device via the network 27a, or store the search result in an external storage device.

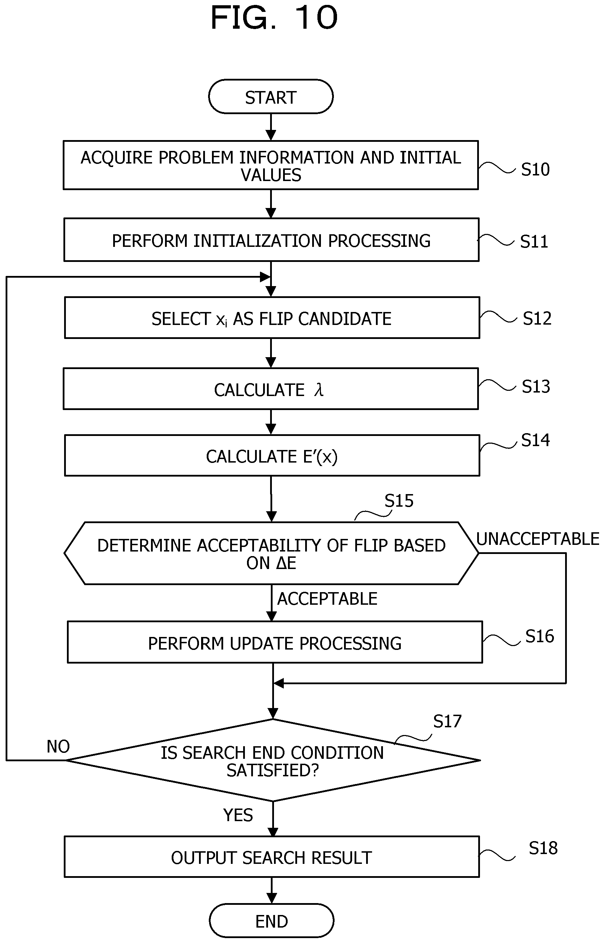

FIG. 10 is a flowchart illustrating an example of a processing procedure of the data processing device of the second embodiment.

Step S10: The input unit 31 acquires the value of the matrix element of the matrix V, which is the problem information of the matrix decomposition problem, the initial value of the evaluation function (E(x)) of the matrix decomposition problem, and the initial values of the matrix elements in the matrices W and H. The acquired problem information and various initial values are stored in the storage unit 32.

Step S11: The initialization processing of the search unit 34 is performed by acquiring the problem information and various initial values stored in the storage unit 32 and setting these in the search unit 34.

Step S12: The flip candidate selection unit 34a selects the $x_i$, which is the matrix element of the matrix W or the matrix H, as the flip candidate.

Step S13: The λ calculation unit 34b calculates the λ that is the weight value of the inequality constraint term. For example, as described above, in a case where a value of a certain matrix element of the matrix V and the result (V') of the logical operation are different values by the flip of the $x_i$, the λ calculation unit 34b increases the value of the λ of the inequality constraint term set to the matrix element of the matrix V by the predetermined ratio. In a case where the V' and the value of the matrix element of the corresponding matrix V match while the solution search is repeated, the λ calculation unit 34b may decrease the value of the λ or return the value of the λ to the initial value.

Step S14: The E' calculation unit 34c calculates an inequality constraint term based on the values of the $x'_i$ and the λ, and calculates the E'(x) that is the total sum of the inequality constraint terms for each $V_{ij}$.

Step S15: The flip acceptability determination unit 34d determines acceptability of the flip of the $x_i$ based on the ΔE. In a case where it is determined that the flip is acceptable, processing in step S16 is performed, and in a case where it is determined that the flip is unacceptable, processing of step S17 is performed.

Step S16: Update processing is performed. In the processing in step S16, the x update unit 34e flips (updates) the $x_i$ selected in the processing in step S12 to the $x'_i$. Furthermore, the E update unit 34f updates the E(x) before the flip to the E'(x).

Step S17: A determination unit (not illustrated) of the search unit 34 determines whether or not the search end condition is satisfied. For example, in a case where the processing in step S12 has been repeated a predetermined number of times, or in a case where the value of the evaluation function smaller than a predetermined value has been obtained, it is determined that the search end condition is satisfied. In a case where it is determined that the search end condition is satisfied, processing in step S18 is performed. In a case where it is determined that the search end condition is not satisfied, the processing from step S12 is repeated.

In a case where the simulated annealing is applied, while the processing in steps S12 to S17 is repeated, the value of the temperature parameter for generating a threshold to be used by the flip acceptability determination unit 34d is decreased in accordance with a predetermined temperature parameter change schedule.

In a case where the replica-exchange method is applied, the processing in steps S12 to S17 by the function of each unit of the search unit 34 illustrated in FIG. 9 is executed for each replica. The values of the temperature parameter different from each other are set to a plurality of replicas. Then, replica exchange is performed each time the processing in steps S12 to S17 is repeated a predetermined number of times. For example, two of the plurality of replicas are randomly selected, and the values of the temperature parameter or the values of the $x_1$ to $x_{K(N+M)}$ are exchanged between the two selected replicas with a predetermined exchange probability based on a difference in the values of the evaluation function or a difference in the values of the temperature parameter between the replicas. In a case where control to vary the value of the λ is performed, the value of the λ is also exchanged between the replicas. Note that the processing of each replica may be performed in a time division manner or may be performed in parallel using a plurality of processor cores.

Step S18: The output unit 35 outputs the search result. As a result, the processing by the data processing device 20 ends.

Note that the order of the processing described above is an example, and the order of the processing may be appropriately changed.

(Comparative Example)

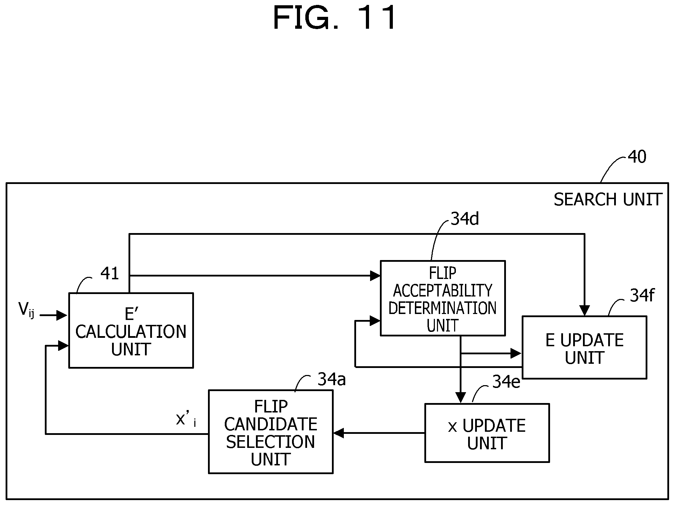

FIG. 11 is a diagram illustrating a search unit of a comparative example. In FIG. 11, the same elements as those of the search unit 34 of the data processing device 20 illustrated in FIG. 9 are given the same reference signs.

A search unit 40 of the comparative example does not include the $\lambda$ calculation unit 34b. Then, an E' calculation unit 41 of the search unit 40 calculates the E'(x), which is the value of the evaluation function (E(x)) when the $x_i$, which is the matrix element of the matrix W or the matrix H, is flipped to the $x'_i$, in accordance with Expression (3). The other elements are the same as those of the search unit 34 illustrated in FIG. 9.

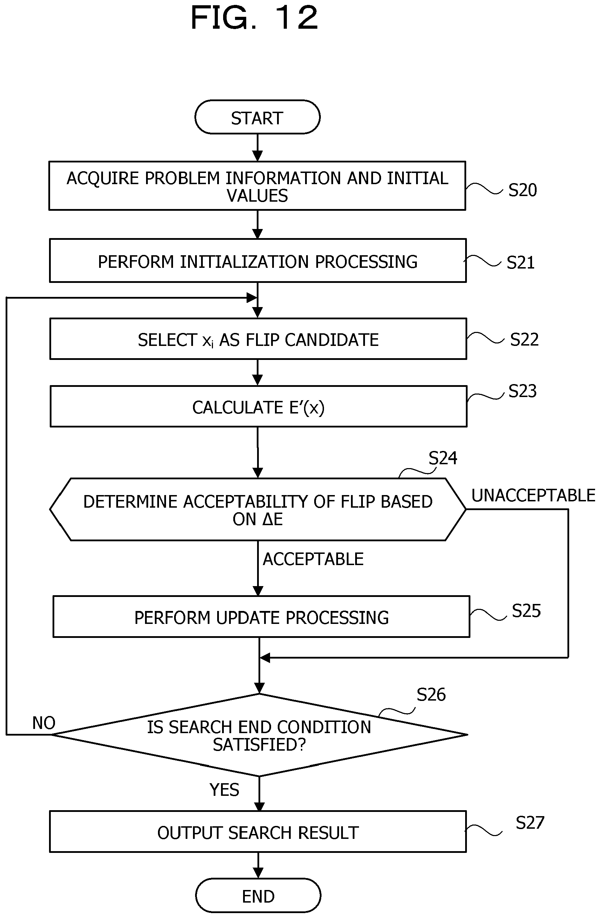

FIG. 12 is a flowchart illustrating a processing procedure of a data processing device including the search unit of the comparative example.

Processing in steps S20 to S22 is the same as the processing in steps S10 to S12 indicated in FIG. 10. The processing procedure of the data processing device including the search unit 40 of the comparative example does not include the processing in step S13 indicated in FIG. 10, in other words, the processing of calculating the $\lambda$ that is the weight value of the inequality constraint term.

Step S23: The E' calculation unit 41 calculates the E'(x), which is the value of the evaluation function (E(x)) when the $x_i$, which is the matrix element of the matrix W or the matrix H, is flipped to the $x'_i$, in accordance with Expression (3).

Subsequent processing in steps S24 to S27 is the same as the processing in steps S15 to S18 indicated in FIG. 10.

In such a search unit 40 of the comparative example, the E(x) without the inequality constraint term is used. A distribution of the E(x) without the inequality constraint term is a similar distribution regardless of the number of $W_{ik}H_{kj}$ being 1, and is a distribution in which it is difficult to perform the solution search.

On the other hand, a distribution of the E(x) with the inequality constraint term used in the present second embodiment is a distribution including a gentle inclination. Thus, it is easy to search for the solution of the matrix decomposition problem, and it is possible to search for the solution at high speed.

(Experimental Example)

Hereinafter, as an experimental example, an example of calculating the matrix decomposition problem for obtaining, from the binary matrix V generated using the matrices W and H randomly created in advance, the matrices W and H again will be described. The product-sum operation of the matrix product was performed by the logical product and the logical sum. The matrix V is a $30 \times 30$ matrix. Furthermore, a ratio of 1 included in the matrix V is 10%. The number of ranks (K) of the matrices W and H is 8. The solution search was performed with 10 problems (instances) and 10 patterns of an initial value of the uniform random number value used to calculate the threshold described above for each instance. The solution search was performed in a case where the $\lambda$, which is the weight value of the inequality constraint term, was fixed in six patterns of 0.1, 0.5, 1.0, 2.0, 4.0, and 8.0, and further in a case where the $\lambda$ was adaptively controlled by two methods.

First adaptive control ($\lambda$ adaptive control 1) is to perform control to increase the value of the $\lambda$ by 10% in a case where the initial value of the $\lambda$ is set to 4 and the constraint is not satisfied (in a case where the value of the $V_{ij}$ does not match the V'), and to return the value of the $\lambda$ to the initial value in a case where the constraint is satisfied. Second adaptive control ($\lambda$ adaptive control 2) is to perform control to increase the value of the $\lambda$ by 10% in a case where the initial value of the $\lambda$ is set to 4 and the constraint is not satisfied, and not to return the value of the $\lambda$ to the initial value even in a case where the constraint is satisfied.

Note that, for comparison, a solution search using the search unit 40 of the comparative example illustrated in FIG. 11 was performed.

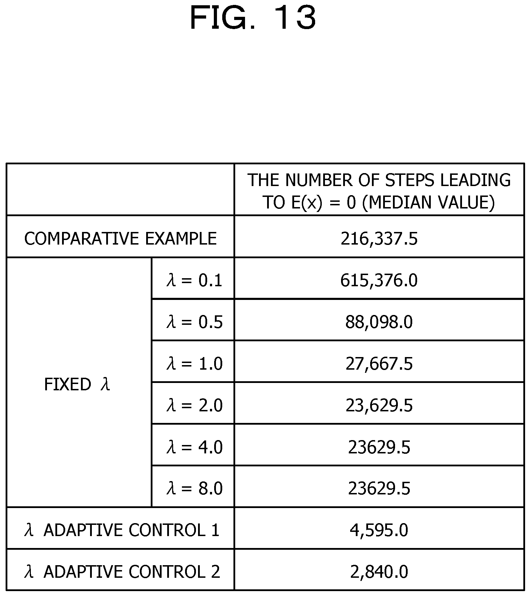

FIG. 13 is a diagram illustrating an example of an experimental result.

In FIG. 13, median values of the number of steps leading to E(x) = 0 (that is, correct answer) are indicated. The number of steps is the number of times of determination as to acceptability of a flip for all the matrix elements of the matrix W and the matrix H. As illustrated in FIG. 13, in a case where the $\lambda$ is greater than 0.1, the correct answer is obtained with a smaller number of steps than in a case where the solution search is performed using the search unit 40 of the comparative example. That is, a speed of the solution search is increased. In a case where the solution search is performed by the $\lambda$ adaptive control 2, the speed may be increased by about 76 times as compared with the case where the solution search is performed using the search unit 40 of the comparative example.

(Another Example of Data Processing Device)

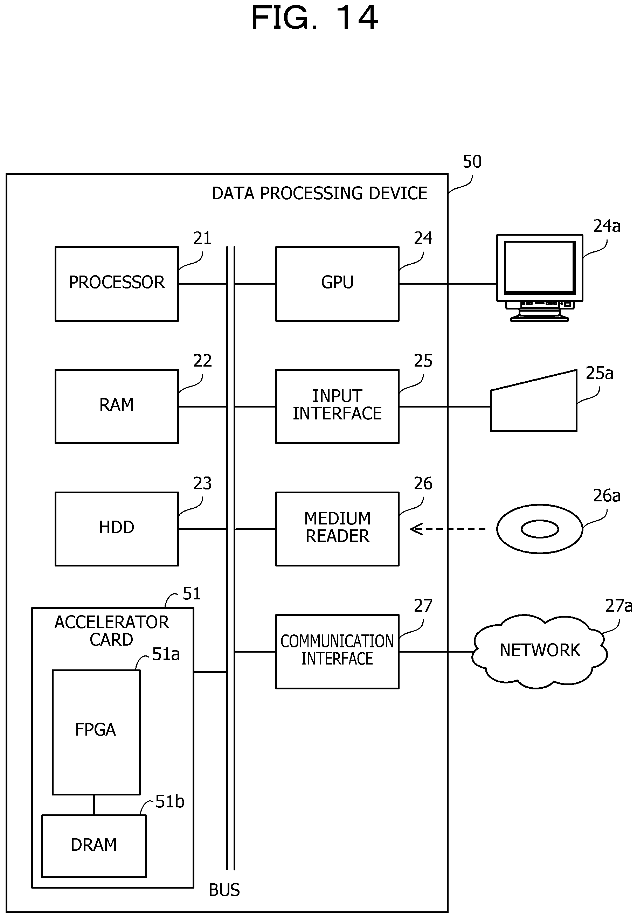

FIG. 14 is a diagram illustrating another hardware example of the data processing device. In FIG. 14, the same elements as the elements illustrated in FIG. 8 are given the same reference signs.

A data processing device 50 includes an accelerator card 51 coupled to a bus. The accelerator card 51 is a hardware accelerator that locally searches for the solution of the matrix decomposition problem using the simulated annealing, the replica-exchange method, or the like. The accelerator card 51 includes an FPGA 51a and a dynamic random access memory (DRAM) 51b.

The storage unit 32 illustrated in FIG. 9 may be implemented by the DRAM 51b. The search unit 34 illustrated in FIG. 9 may be implemented by the FPGA 51a. The storage unit 11 and the processing unit 12 of the data processing device 10 illustrated in FIG. 1 may also be implemented by the FPGA 51a and the DRAM 51b.

Note that there may be a plurality of the accelerator cards 51.

Note that, as described above, the processing contents described above may be implemented by causing the data processing devices 10, 20, and 50 to execute a program.

The program may be recorded in a computer-readable recording medium (for example, the recording medium 26a). As the recording medium, for example, a magnetic disk, an optical disk, a magneto-optical disk, a semiconductor memory, or the like may be used. Examples of the magnetic disk include an FD and an HDD. Examples of the optical disk include a CD, a CD-recordable (R)/rewritable (RW), a DVD, and a DVD-R/RW. The program may be recorded in a portable recording medium and distributed. In that case, the program may be copied from the portable recording medium to another recording medium (for example, the HDD 23) and executed.

While one aspect of the program, the data processing device, and the data processing method of the embodiments has been described above based on the embodiments, those are merely examples, and are not limited to the description above.

For example, in the above description, it has been described that the E'(x) is calculated and the $\Delta E$ is calculated by E(x) - E'(x), but the present disclosure is not limited to this. The $\Delta E$ may be directly calculated by holding in advance a local field $h_i$ representing the change amount of the value of the E(x) when the $x_i$ is flipped and calculating $-\Delta x_i h_i = \Delta E$ using $x_i - x'_i = \Delta x_i$ and the $h_i$ (see, for example, Japanese Laid-open Patent Publication No. 2023 000462, and the like).

**Claims**

1. A data processing program comprising instructions which, when executed by a computer, cause the computer to execute processing comprising:

   acquiring values of a plurality of first matrix elements that are problem information of a matrix decomposition problem that represents a binary first matrix represented by the plurality of first matrix elements by a matrix product of a second matrix and a third matrix, and initial values of a plurality of second matrix elements of the second matrix and a plurality of third matrix elements of the third matrix;

   determining whether to adopt a change in a value of a fourth matrix element of any one of the plurality of second matrix elements and the plurality of third matrix elements, based on a change amount of a value of an evaluation function represented by a sum of inequality constraint terms set for the plurality of first matrix elements, the change amount being occurred in association with a change in the value of the fourth matrix element; and

   searching for values of the plurality of second matrix elements and the plurality of third matrix elements by repeating processing of updating the value of the fourth matrix element while the fourth matrix element is changed when it is determined that the change in the value of the fourth matrix element is adopted.

2. The data processing program according to claim 1, wherein

   when a result of a logical operation representing a product-sum operation included in calculation of the matrix product matches a value of a fifth matrix element specified by a first row and a first column of the first matrix, a value of the inequality constraint term set to the fifth matrix element is 0 or a predetermined threshold, the logical operation being an operation of a matrix element of a first row of the second matrix and a matrix element of a first column of the third matrix, which represents a product-sum operation included in calculation of the matrix product, and

   when the result of the logical operation does not match the value of the fifth matrix element, the value of the inequality constraint term set to the fifth matrix element is 0 or a value greater than the threshold.

3. The data processing program according to claim 2, wherein the logical operation is an operation of performing a product-sum operation of a matrix element of the first row and a matrix element of the first column by a logical product and a logical sum.

4. The data processing program according to claim 2, wherein the logical operation is an operation of performing a product-sum operation of a matrix element of the first row and a matrix element of the first column by a logical product and an exclusive OR.

5. The data processing program according to claim 2, wherein the logical operation is an operation of performing a product-sum operation of a matrix element of the first row and a matrix element of the first column by an exclusive NOR and a majority decision of the exclusive NOR.

6. The data processing program according to claim 1, wherein a weight value of the inequality constraint term set to each of the plurality of first matrix elements has a different value depending on whether the values of the plurality of first matrix elements are 0 or 1.

7. The data processing program according to claim 1, for causing the computer to further execute processing of increasing, in a case where a value of a sixth matrix element of the plurality of first matrix elements does not match a result of a logical operation that represents a product-sum operation included in calculation of the matrix product due to the change in the value of the fourth matrix element, a weight value of the inequality constraint term set to the sixth matrix element by a predetermined ratio.

8. A data processing apparatus comprising:

   a storage unit configured to store values of a plurality of first matrix elements that are problem information of a matrix decomposition problem that represents a binary first matrix represented by the plurality of first matrix elements by a matrix product of a second matrix and a third matrix, and initial values of a plurality of second matrix elements of the second matrix and a plurality of third matrix elements of the third matrix;
   a determination unit configured to acquire the values of the plurality of first matrix elements and the initial values, and determine whether to adopt a change in a value of a fourth matrix element of any one of the plurality of second matrix elements and the plurality of third matrix elements, based on a change amount of a value of an evaluation function represented by a sum of inequality constraint terms set for the plurality of first matrix elements, the change amount being occurred in association with a change in the value of the fourth matrix element; and
   a search unit configured to search for values of the plurality of second matrix elements and the plurality of third matrix elements, by repeating processing of updating the value of the fourth matrix element while the fourth matrix element is changed when it is determined that the change in the value of the fourth matrix element is adopted.

9. A data processing method implemented by a computer, the data processing method comprising:

   acquiring values of a plurality of first matrix elements that are problem information of a matrix decomposition problem that represents a binary first matrix represented by the plurality of first matrix elements by a matrix product of a second matrix and a third matrix, and initial values of a plurality of second matrix elements of the second matrix and a plurality of third matrix elements of the third matrix;
   determining whether to adopt a change in a value of a fourth matrix element of any one of the plurality of second matrix elements and the plurality of third matrix elements, based on a change amount of a value of an evaluation function represented by a sum of inequality constraint terms set for the plurality of first matrix elements, the change amount being occurred in association with a change in the value of the fourth matrix element; and
   searching for values of the plurality of second matrix elements and the plurality of third matrix elements by repeating processing of updating the value of the fourth matrix element while the fourth matrix element is changed when it is determined that the change in the value of the fourth matrix element is adopted.

# FIG. 1

MATRIX DECOMPOSITION PROBLEM (PROBLEM OF SEARCHING FOR W AND H FOR WHICH V ≈ W∘H IS SATISFIED)

S1
ACQUIRE PROBLEM INFORMATION (VALUE OF MATRIX ELEMENT OF MATRIX V), INITIAL VALUE OF E(x), AND INITIAL VALUES OF MATRIX ELEMENTS (x) OF W AND H

S2 SEARCH PROCESSING

S2a SELECT $x_i$

S2b CALCULATE $\Delta E$

S2c DETERMINE ADOPTION OR NON-ADOPTION OF FLIP OF $x_i$

S2d PERFORM UPDATE PROCESSING

$P_{ij}$   $V_{ij} = 0$   $V_{ij} = 1$   $\sum_{k=1}^{K} W_{ik}H_{kj}$

—— WITH INEQUALITY CONSTRAINT TERM
---- WITHOUT INEQUALITY CONSTRAINT TERM
E(x)

10 DATA PROCESSING DEVICE
12 PROCESSING UNIT
11 STORAGE UNIT
11a PROBLEM INFORMATION
11b INITIAL VALUE

# FIG. 2

MATRIX W

MATRIX H

N

K

K

M

X

$X_1$ $X_2$ $\cdots\cdots\cdots$ $X_{NK}$ $X_{NK+1}$ $X_{K(N+M)}$

N × K

K × M

# FIG. 3

$$\text{logical}\left(\sum_{k=1}^{K} W_{ik}H_{kj}\right)$$

# FIG. 4

$$\mathrm{mod}\left(\sum_{k=1}^{K} W_{ik}H_{kj},\ 2\right)$$

# FIG. 5

# FIG. 6

| A | B | ENOR |
|---|---|------|
| 0 | 0 | 1 |
| 0 | 1 | 0 |
| 1 | 0 | 0 |
| 1 | 1 | 1 |

# FIG. 7

# FIG. 8

DATA PROCESSING DEVICE 20

PROCESSOR 21

RAM 22

HDD 23

GPU 24

INPUT INTERFACE 25

MEDIUM READER 26

COMMUNICATION INTERFACE 27

BUS

24a

25a

26a

NETWORK 27a

# FIG. 9

**20** DATA PROCESSING DEVICE

**31** INPUT UNIT → **32** STORAGE UNIT → **33** INITIALIZATION PROCESSING UNIT

**34** SEARCH UNIT

$E'(x)$

$V_{ij}$ → **34c** $E'$ CALCULATION UNIT

**34d** FLIP ACCEPTABILITY DETERMINATION UNIT

**34f** E UPDATE UNIT

$V'$

$x'_i$ **34a** FLIP CANDIDATE SELECTION UNIT

**34e** x UPDATE UNIT

**34b** $\lambda$ CALCULATION UNIT

$\lambda$

$V_{ij}$

**35** OUTPUT UNIT

# FIG. 10

START

ACQUIRE PROBLEM INFORMATION AND INITIAL VALUES — S10

PERFORM INITIALIZATION PROCESSING — S11

SELECT $x_i$ AS FLIP CANDIDATE — S12

CALCULATE $\lambda$ — S13

CALCULATE $E'(x)$ — S14

S15

DETERMINE ACCEPTABILITY OF FLIP BASED ON $\Delta E$ — UNACCEPTABLE

ACCEPTABLE

PERFORM UPDATE PROCESSING — S16

S17

NO — IS SEARCH END CONDITION SATISFIED?

YES

OUTPUT SEARCH RESULT — S18

END

# FIG. 11

# FIG. 12

START

ACQUIRE PROBLEM INFORMATION AND INITIAL VALUES ~ S20

PERFORM INITIALIZATION PROCESSING ~ S21

SELECT $x_i$ AS FLIP CANDIDATE ~ S22

CALCULATE E'(x) ~ S23

S24

DETERMINE ACCEPTABILITY OF FLIP BASED ON ΔE — UNACCEPTABLE

ACCEPTABLE

PERFORM UPDATE PROCESSING ~ S25

S26

NO — IS SEARCH END CONDITION SATISFIED?

YES

OUTPUT SEARCH RESULT ~ S27

END

# FIG. 13

| | THE NUMBER OF STEPS LEADING TO E(x) = 0 (MEDIAN VALUE) | |
|---|---|---|
| COMPARATIVE EXAMPLE | | 216,337.5 |
| FIXED $\lambda$ | $\lambda = 0.1$ | 615,376.0 |
| | $\lambda = 0.5$ | 88,098.0 |
| | $\lambda = 1.0$ | 27,667.5 |
| | $\lambda = 2.0$ | 23,629.5 |
| | $\lambda = 4.0$ | 23629.5 |
| | $\lambda = 8.0$ | 23629.5 |
| $\lambda$ ADAPTIVE CONTROL 1 | | 4,595.0 |
| $\lambda$ ADAPTIVE CONTROL 2 | | 2,840.0 |

# FIG. 14

DATA PROCESSING DEVICE 50

PROCESSOR 21

RAM 22

HDD 23

ACCELERATOR CARD 51

FPGA 51a

DRAM 51b

GPU 24

24a

INPUT INTERFACE 25

25a

MEDIUM READER 26

26a

COMMUNICATION INTERFACE 27

NETWORK 27a

BUS

**EUROPEAN SEARCH REPORT**

Europäisches
Patentamt
European
Patent Office
Office européen
des brevets

Application Number

EP 24 18 8859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OSMAN ASIF MALIK ET AL: "Binary matrix factorization on special purpose hardware", ARXIV.ORG, CORNELL UNIVERSITY LIBRARY, 201 OLIN LIBRARY CORNELL UNIVERSITY ITHACA, NY 14853, 7 January 2022 (2022-01-07), XP091124805, DOI: 10.1371/JOURNAL.PONE.0261250 * abstract * * page 2 - page 3 * * page 16 - page 18 * * Algorithm 1 and 2 * | 1-9 | INV. G06F17/16 |
| X,P | MAKIKO KONOSHIMA ET AL: "Generating gradients in the energy landscape using rectified linear type cost functions for efficiently solving 0/1 matrix factorization in Simulated Annealing", ARXIV.ORG, CORNELL UNIVERSITY LIBRARY, 201 OLIN LIBRARY CORNELL UNIVERSITY ITHACA, NY 14853, 27 December 2023 (2023-12-27), XP091706854, DOI: 10.7566/JPSJ.93.044002 * abstract * * figures 1-3 * * Sections 1-3 * | 1-9 | |
| A | US 2019/042543 A1 (KONOSHIMA MAKIKO [JP]) 7 February 2019 (2019-02-07) * the whole document * | 1-9 | |

TECHNICAL FIELDS SEARCHED (IPC)

G06F

The present search report has been drawn up for all claims

| Place of search | Date of completion of the search | Examiner |
|---|---|---|
| Munich | 21 December 2024 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 8859

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2024

| Patent document cited in search report | Publication date | Patent family member(s) | | Publication date |
|---|---|---|---|---|
| US 2019042543 A1 | 07-02-2019 | JP | 6958085 B2 | 02-11-2021 |
| | | JP | 2019028896 A | 21-02-2019 |
| | | US | 2019042543 A1 | 07-02-2019 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021111097 A

- JP 2023000462 A

**Non-patent literature cited in the description**

- **F. CAMILLI et al.** Matrix factorization with neural networks. *arXiv:2212.02105v1*, 2022

- **Z. ZHANG et al.** Binary matrix factorization for analyzing gene expression data. Springer, 02 September 2009